# EUROPÄISCHE PATENTANMELDUNG

(11) **EP 4 837 706 A1**
(43) Veröffentlichungstag der Anmeldung: **11.11.2026**
(21) Anmeldenummer: 25175170.7
(22) Anmeldetag: 08.05.2025
(51) Int. Cl.: B25J 9/16, G06F 40/20

(54) **VERFAHREN ZUM STEUERN EINES TECHNISCHEN SYSTEMS**

(71) Anmelder: Robert Bosch GmbH, 70442 Stuttgart (DE)
(72) Erfinder: Babu, Harisankar, 70191 Stuttgart (DE); Schillinger, Philipp Christian, 71272 Renningen (DE)

(57) **Zusammenfassung**

Gemäß verschiedenen Ausführungsformen wird ein Verfahren zum Steuern eines technischen Systems bereitgestellt, aufweisend, Empfangen einer textuellen Domänenbeschreibung, die Aktionen beschreibt, die von dem technischen System ausgeführt werden können und Zustandseigenschaften des technischen Systems ändern, Erzeugen eines Domänenmodells gemäß der Domänenbeschreibung mittels eines Domänenmodellgenerators, Empfangen einer textuellen Anfangszustandsbeschreibung, die einen Anfangszustand des technischen Systems beschreibt, Erzeugen eines Anfangszustandsmodells gemäß der Anfangszustandsbeschreibung mittels eines Anfangszustandsmodellgenerators, Empfangen einer textuellen Zielzustandsbeschreibung, die einen Zielzustand des technischen Systems beschreibt, Erzeugen eines Zielzustandsmodells gemäß der Zielzustandsbeschreibung mittels eines Zielzustandsmodellgenerators, Erstellen eines Plans mittels eines symbolischen Planers durch Zuführen des Domänenmodells, des Anfangszustandsmodells und des Zielzustandsmodells zu einem symbolischen Planer und Steuern des technischen System gemäß dem erstellten Plan.

## Beschreibung

Die vorliegende Offenbarung bezieht sich auf Verfahren zum Steuern eines technischen Systems.

Das Steuern von technischen Systemen erfordert typischerweise die Planung einer Folge von Aktionen. Herkömmliche Einsätze zur Planung in komplexen Umgebungen, in denen viele verschiedene Steuersituationen auftreten können, erfordert typischerweise umfangreiche manuelle Eingriffe durch menschliche Benutzer, was ihre Skalierbarkeit und Zugänglichkeit einschränkt.

Symbolische Planer erfordern beispielsweise von Experten erstellte Domänenmodelle, die bei jeder Änderung der Umgebung manuell aktualisiert werden müssten, was sie für dynamische, reale Anwendungen ungeeignet macht. Large-Language-Modelle (LLMs) konnten zwar strukturierte Ausgaben aus natürlicher Sprache generieren, sind jedoch fehleranfällig, nicht konsistent.

Es sind deshalb Planungsansätze wünschenswert, die eine möglichst autonome Planung (mit keinem oder wenigem Eingriff durch menschliche Experten) und zugleich zuverlässige Planung ermöglichen.

Gemäß verschiedenen Ausführungsformen wird ein Verfahren zum Steuern eines technischen Systems bereitgestellt, aufweisend:
- Empfangen einer textuellen Domänenbeschreibung, die Aktionen beschreibt, die von dem technischen System ausgeführt werden können und Zustandseigenschaften des technischen Systems (z.B. ob ein Behälter auf einem anderen Behälter ist) ändern
- Erzeugen eines Domänenmodells gemäß der Domänenbeschreibung mittels eines Domänenmodellgenerators (d.h. das Domänenmodell spezifiziert Eigenschaften und mögliche Aktionen wie in der Domänenbeschreibung beschrieben)
- Empfangen einer textuellen Anfangszustandsbeschreibung, die einen Anfangszustand des technischen Systems beschreibt
- Erzeugen eines Anfangszustandsmodells gemäß der Anfangszustandsbeschreibung mittels eines Anfangszustandsmodellgenerators
- Empfangen einer textuellen Zielzustandsbeschreibung, die einen Zielzustand des technischen Systems beschreibt
- Erzeugen eines Zielzustandsmodells gemäß der Zielzustandsbeschreibung mittels eines Zielzustandsmodellgenerators,
   wobei der Domänenmodellgenerator, der Anfangszustandsmodellgenerator und der Zielzustandsmodellgenerator mittels mindestens eines generativen Sprachmodells (z.B. jeweils mittels eines jeweiligen generativen Sprachmodells, z.B. mittels mindestens eines LLMs) implementiert sind, das die Domänenbeschreibung, die Anfangszustandsbeschreibung bzw. die Zielzustandsbeschreibung verarbeitet und
   wobei der Domänenmodellgenerator, der Anfangszustandsmodellgenerator und der Zielzustandsmodellgenerator bei der Erzeugung des Domänenmodells, des Anfangszustandsmodells und/oder des Zielzustandsmodells Feedback zu dem Domänenmodell, dem Anfangszustandsmodell und/oder dem Zielzustandsmodell austauschen und das Domänenmodell, das Anfangszustandsmodell bzw. das Zielzustandsmodell anpassen, bis das Domänenmodell, das Anfangszustandsmodell und das Zielzustandsmodell konsistent und/oder vollständig sind (d.h. sie zusammen ein konsistentes und/oder vollständiges Planungsproblemmodell ergeben)
- Erstellen eines (Steuerungs-)Plans mittels eines symbolischen Planers (engl. symbolic planer) durch Zuführen des Domänenmodells, des Anfangszustandsmodells und des Zielzustandsmodells zu einem symbolischen Planer und
- Steuern des technischen System gemäß dem erstellten Plan.

Im Unterschied zu herkömmlichen Planungsansätzen bzw. Planungssystemen, die Expertenintervention oder unzuverlässiges Schlussfolgern auf der Grundlage eines LLMs erforderten, was sie für dynamische Umgebungen ineffizient macht, wird gemäß dem oben beschriebenen Verfahren die Planung zu einem modularen, anpassungsfähigen Prozess, bei dem ein oder mehrere LLMs bei der Strukturierung von Problemen helfen, während ein symbolischer Planer die Korrektheit des Plans sicherstellt. So wird eine skalierbare, automatisierte und zugängliche Lösung ermöglicht. Dies ermöglicht eine zuverlässige Steuerung in komplexen Umgebungen, die eine Vielzahl von Objekten, Szenen und Aufgaben umfassen. Gemäß verschiedenen Ausführungsformen wird dies wird durch die Zusammenarbeit mehrerer Agenten erreicht, wobei die generative Flexibilität großer Sprachmodelle (LLMs) mit den strukturierten Argumentationsfähigkeiten symbolischer Planer kombiniert wird. Das Verfahren ist modular, skalierbar und an eine Vielzahl von Planungsproblemen anpassbar, wobei es sich besonders für Planungsprobleme eignet, die gleichzeitig komplex und unstrukturiert sind.

Das oben beschriebene Verfahren bietet somit einen allgemeinen und skalierbaren Ansatz für die Planung zu Steuerung technischer Systeme. Durch die Kombination von mindestens einem generativen Sprachmodell (z.B. einem oder mehreren LLMs) mit symbolischer Planung in einem modularen Multi-Agenten-Framework wird eine automatische Anpassung an sich ändernde Umgebungen, eine verbesserte Konsistenz und eine geringere Abhängigkeit von Experteninterventionen gewährleistet, wodurch sich der Planungsansatz gut für reale Anwendungen wie Robotik, industrielle Automatisierung und autonome Systeme eignet.

Ein symbolischer Planer (engl. symbolic planer) ist eine Komponente in der kognitiven Architektur von autonomen Robotervorrichtungen, die symbolische Repräsentationen und logische Schlussfolgerungen verwendet, um Aufgaben zu planen. Der symbolische Planer erstellt (High-Level-)Pläne basierend auf einer symbolischen Darstellung der Umgebung und den Zielen der Robotervorrichtung. Diese Pläne beinhalten eine Sequenz von Aktionen, die unter Berücksichtigung der aktuellen Zustände und der gewünschten Zielzustände (von einer Low-Level-Steuereinrichtung) ausgeführt werden. Ein Beispiel hierfür ist ein PDDL (Planning Domain Definition Language)-basierter Planer.

Im Folgenden werden verschiedene Ausführungsbeispiele angegeben.

Ausführungsbeispiel 1 ist ein Verfahren zum Steuern eines technischen Systems, wie oben beschrieben.

Ausführungsbeispiel 2 ist ein Verfahren nach Ausführungsbeispiel 1, wobei der Anfangszustandsmodellgenerator prüft, ob Zustandseigenschaften, die die Anfangszustandsbeschreibung spezifiziert, in dem Domänenmodell enthalten sind, und, in Reaktion darauf, dass er feststellt, dass eine oder mehrere Zustandseigenschaften, die die Anfangszustandsbeschreibung spezifiziert, in dem Domänenmodell nicht enthalten sind, den Domänenmodellgenerator auffordert, das Domänenmodell um die ein oder mehreren Zustandseigenschaften zu ergänzen.

Dies ist ein Beispiel dafür, wie Konsistenz und/oder Vollständigkeit des Planungsproblemmodells hergestellt werden.

Ausführungsbeispiel 3 ist ein Verfahren nach Ausführungsbeispiel 1 oder 2, wobei der Zielzustandsmodellgenerator prüft, ob Zustandseigenschaften, die die Zielzustandsbeschreibung spezifiziert, in dem Domänenmodell enthalten sind, und, in Reaktion darauf, dass er feststellt, dass eine oder mehrere Zustandseigenschaften, die die Zielzustandsbeschreibung spezifiziert, in dem Domänenmodell nicht enthalten sind, den Domänenmodellgenerator auffordert, das Domänenmodell um die ein oder mehreren Zustandseigenschaften zu ergänzen.

Dies ist ein weiteres Beispiel dafür, wie Konsistenz und/oder Vollständigkeit des Planungsproblemmodells hergestellt werden.

Ausführungsbeispiel 4 ist ein Verfahren nach einem der Ausführungsbeispiele 1 bis 3, wobei der Zielzustandsmodellgenerator prüft, ob Aktionen, die es ermöglichen, von dem Anfangszustand in den Zielzustand zu gelangen, in dem Domänenmodell enthalten sind, und, in Reaktion darauf, dass er feststellt, dass eine oder mehrere Aktionen, die es ermöglichen, von dem Anfangszustand in den Zielzustand zu gelangen, in dem Domänenmodell nicht enthalten sind, den Domänenmodellgenerator auffordert, das Domänenmodell um die ein oder mehreren Aktionen zu ergänzen.

Dies ist ein weiteres Beispiel dafür, wie Konsistenz und/oder Vollständigkeit des Planungsproblemmodells hergestellt werden.

Ausführungsbeispiel 5 ist ein Verfahren nach einem der Ausführungsbeispiele 1 bis 4, wobei der Zielzustandsmodellgenerator prüft, ob Zustandseigenschaften, die die Zielzustandsbeschreibung spezifiziert, in dem Anfangszustandsmodell enthalten sind, und, in Reaktion darauf, dass er feststellt, dass eine oder mehrere Zustandseigenschaften, die die Zielzustandsbeschreibung spezifiziert, in dem Anfangszustandsmodell nicht enthalten sind, den Anfangszustandsmodellgenerator auffordert, das Anfangszustandsmodell um die ein oder mehreren Zustandseigenschaften zu ergänzen.

Dies ist ein weiteres Beispiel dafür, wie Konsistenz und/oder Vollständigkeit des Planungsproblemmodells hergestellt werden.

Ausführungsbeispiel 6 ist ein Verfahren nach einem der Ausführungsbeispiele 1 bis 5, wobei das Domänenmodell Variablen enthält und jede Variable mehrere Werte haben kann und eine Zustandseigenschaft des technischen Systems beschreibt.

Damit kann das Domänenmodell von einem symbolischen Planer verarbeitet werden.

Ausführungsbeispiel 7 ist ein Verfahren nach Ausführungsbeispiel 6, wobei der Anfangszustandsmodellgenerator das Anfangszustandsmodell derart erzeugt, dass es die Werte zumindest eines Teils der Variablen gemäß der Anfangszustandsbeschreibung festlegt.

Damit ist der Anfangszustand für den symbolischen Planer klar definiert und folgt der jeweiligen textuellen Beschreibung.

Ausführungsbeispiel 8 ist ein Verfahren nach Ausführungsbeispiel 6 oder 7, wobei der Zielzustandsmodellgenerator das Zielzustandsmodell derart erzeugt, dass es die Werte zumindest eines Teils der Variablen gemäß der Zielzustandsbeschreibung festlegt.

Damit ist der Zielzustand für den symbolischen Planer klar definiert und folgt der jeweiligen textuellen Beschreibung.

Ausführungsbeispiel 9 ist ein Verfahren nach einem der Ausführungsbeispiele 1 bis 8, wobei die Domänenbeschreibung, die Anfangszustandsbeschreibung und die Zielzustandsbeschreibung dem mindestens einen generativen Sprachmodell mit der Aufforderung zugeführt werden, ein Planungsproblemmodell bzw. Komponenten eines Planungsproblemmodells für den symbolischen Planer zu erstellen.

Das eine oder die mehreren generativen Sprachmodell(e) werden anschaulich gesprochen somit als Schnittstelle zwischen der Quelle textueller Beschreibungen (also z.B. einem menschlichen Benutzer, einer Dokumentation, einer Betriebsanleitung etc.) und einem symbolischen Planer eingesetzt. Dies erhöht die Skalierbarkeit und Anpassbarkeit gegenüber der alleinigen Verwendung eines symbolischen Planers.

Ausführungsbeispiel 10 ist eine Steuereinrichtung, eingerichtet zum Durchführen eines Verfahrens nach einem der Ausführungsbeispiele 1 bis 9.

Ausführungsbeispiel 11 ist ein Computerprogramm mit Befehlen, die, wenn sie durch einen Prozessor ausgeführt werden, bewirken, dass der Prozessor ein Verfahren nach einem der Ausführungsbeispiele 1 bis 9 durchführt.

Ausführungsbeispiel 12 ist ein computerlesbares Medium, das Befehle speichert, die, wenn sie durch einen Prozessor ausgeführt werden, bewirken, dass der Prozessor ein Verfahren nach einem der Ausführungsbeispiele 1 bis 9 durchführt.

In den Zeichnungen beziehen sich ähnliche Bezugszeichen im Allgemeinen auf dieselben Teile in den ganzen verschiedenen Ansichten. Die Zeichnungen sind nicht notwendigerweise maßstäblich, wobei die Betonung stattdessen im Allgemeinen auf die Darstellung der Prinzipien der Erfindung gelegt wird. In der folgenden Beschreibung werden verschiedene Aspekte mit Bezug auf die folgenden Zeichnungen beschrieben.
- Figur 1: zeigt einen Roboter als ein Beispiel für ein zu steuerndes technisches System.
- Figur 2: veranschaulicht ein Beispiel, bei dem ein Planungsproblemmodell angepasst werden muss.
- Figur 3: veranschaulicht ein Planungssystem gemäß einer Ausführungsform mit einer Multi-Agenten-Planungs-Framework-Architektur.
- Figur 4: zeigt ein Beispiel für die Architektur eines Agenten.
- Figur 5: zeigt ein Ablaufdiagramm, das ein Verfahren zum Steuern eines technischen Systems gemäß einer Ausführungsform darstellt.

Die folgende ausführliche Beschreibung bezieht sich auf die begleitenden Zeichnungen, die zur Erläuterung spezielle Details und Aspekte dieser Offenbarung zeigen, in denen die Erfindung ausgeführt werden kann. Andere Aspekte können verwendet werden und strukturelle, logische und elektrische Änderungen können durchgeführt werden, ohne vom Schutzbereich der Erfindung abzuweichen. Die verschiedenen Aspekte dieser Offenbarung schließen sich nicht notwendigerweise gegenseitig aus, da einige Aspekte dieser Offenbarung mit einem oder mehreren anderen Aspekten dieser Offenbarung kombiniert werden können, um neue Aspekte zu bilden.

Im Folgenden werden verschiedene Beispiele genauer beschrieben.

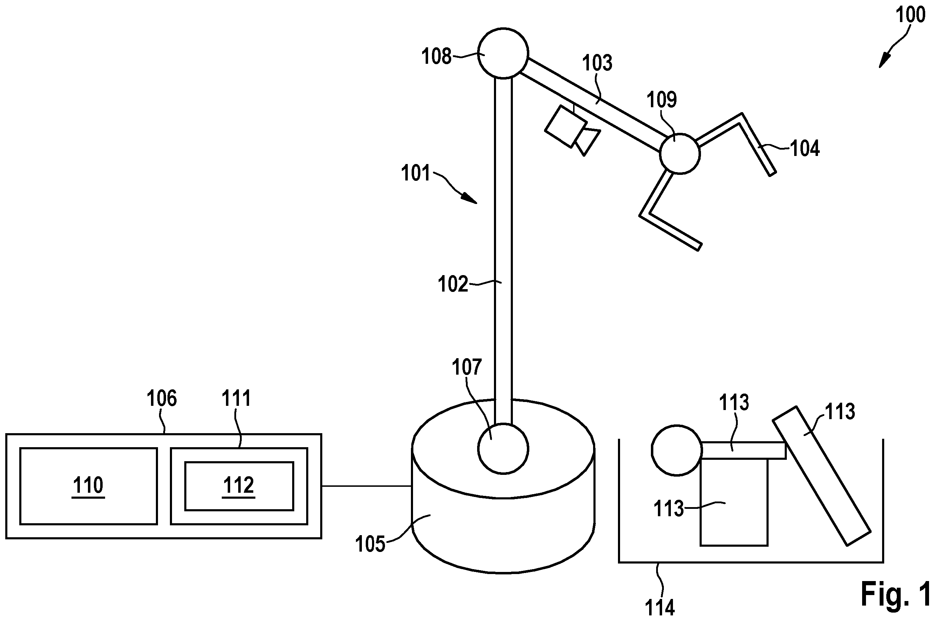

Figur 1 zeigt einen Roboter 100 als ein Beispiel für ein zu steuerndes technisches System.

Der Roboter 100 umfasst einen Roboterarm 101, z. B. einen Industrieroboterarm zum Handhaben oder Montieren eines Werkstücks oder eines oder mehrerer anderer Objekte 113. Es können in der Steuersituation auch Hindernisse 114, wie beispielsweise ein Behälter, in dem sich die Objekte 113 befinden, oder auch menschliche Benutzer vorhanden sein, die der Roboterarm 101 nicht treffen soll. Der Roboterarm 101 umfasst Manipulatoren 102, 103, 104 und einen Sockel (oder Träger) 105, der die Manipulatoren 102, 103, 104 trägt. Der Begriff "Manipulator" bezieht sich auf die beweglichen Elemente des Roboterarms 101, deren Betätigung eine physische Interaktion mit der Umgebung ermöglicht, z. B., um eine Aufgabe auszuführen. Zur Steuerung umfasst der Roboter 100 eine (Roboter-)Steuereinrichtung 106, die so konfiguriert ist, dass sie die Interaktion mit der Umgebung gemäß einem Steuerprogramm durchführt. Das letzte (vom Träger 105 am weitesten entfernte) Element 104 der Manipulatoren 102, 103, 104 wird auch als Endeffektor 104 bezeichnet und umfasst ein Greifwerkzeug (das auch ein Sauggreifer sein kann).

Die anderen Manipulatoren 102, 103 (näher am Träger 105) können eine Positioniervorrichtung bilden, so dass zusammen mit dem Endeffektor 104 der Roboterarm 101 mit dem Endeffektor 104 an seinem Ende entsteht. Der Roboterarm 101 ist ein mechanischer Arm, der ähnliche Funktionen wie ein menschlicher Arm erfüllen kann.

Der Roboterarm 101 kann Gelenkelemente 107, 108, 109 umfassen, die die Manipulatoren 102, 103, 104 miteinander und mit dem Träger 105 verbinden. Ein Gelenkelement 107, 108, 109 kann ein oder mehrere Gelenke aufweisen, von denen jedes den zugehörigen Manipulatoren eine Drehbewegung (d. h. eine Rotationsbewegung) und/oder eine Translationsbewegung (d. h. eine Verschiebung) relativ zueinander ermöglichen kann. Die Bewegung der Manipulatoren 102, 103, 104 kann mit Hilfe von Aktuatoren eingeleitet werden, die von der Steuereinrichtung 106 gesteuert werden.

Der Begriff "Aktor" kann als ein Bauteil verstanden werden, das geeignet ist, auf einen Mechanismus oder Prozess einzuwirken, wenn es angetrieben wird. Der Aktor kann Anweisungen der Steuereinrichtung 106 in mechanische Bewegungen umsetzen. Der Aktor, z. B. ein elektromechanischer Wandler, kann so konfiguriert sein, dass er als Reaktion auf eine Ansteuerung elektrische Energie in mechanische Energie umwandelt.

Der Begriff "Steuereinrichtung" kann als jede Art von Logik implementierender Einheit verstanden werden, die z. B. einen Schaltkreis und/oder einen Prozessor umfassen kann, der in der Lage ist, in einem Speichermedium gespeicherte Software, Firmware oder eine Kombination davon auszuführen, und der Befehle erteilen kann, z. B. an ein Stellglied im vorliegenden Beispiel. Die Steuereinrichtung kann z. B. durch Programmcode (z. B. Software) konfiguriert sein, um den Betrieb eines Systems, im vorliegenden Beispiel eines Roboters, zu steuern.

Im vorliegenden Beispiel umfasst die Steuereinrichtung 106 einen oder mehrere Prozessoren 110 und einen Speicher 111, in dem Code und Daten gespeichert sind, auf deren Grundlage der Prozessor 110 den Roboterarm 101 steuert. Gemäß verschiedenen Ausführungsformen steuert die Steuereinrichtung 106 den Roboterarm 101 auf der Grundlage eines maschinellen Lernmodells (z. B. einschließlich eines oder mehrerer neuronaler Netze) 112, das in dem Speicher 111 gespeichert ist.

Bei der Steuerung eines technischen Systems zum Durchführen einer Aufgabe werden typischerweise Aktionen geplant, wie z. B. Greifen, Bewegen, Platzieren usw. im Falle eines Roboterarms und dann werden diese Aktionen ausgeführt (was die Steuerung der genauen Bewegungsabläufe erfordert, d.h. ein Roboter muss beispielsweise über bestimmte Fähigkeiten wie sicheres Greifen von Objekten etc. verfügen).

Die Planung in unsicheren, dynamischen und komplexen Umgebungen, wie z.B. in der Robotik wie im Beispiel von Figur 1 aber auch beim autonomen Fahren oder der industriellen Automatisierung, die eine Vielzahl von Objekten und mögliche Steuersituationen enthalten und verschiedene Aufgaben durchzuführen sind, im Folgenden als Offene-Welt-Umgebungen bezeichnet, besteht ein typischer Ansatz darin, klassische symbolische Planer oder eigenständige große generative Sprachmodelle (typischerweise Large-Language-Modelle (LLMs)) von beiden zur Planung zu verwenden.

Symbolische Planer, wie PDDL-basierte Planungs-Frameworks, sind hervorragend darin, optimale Pläne zu erstellen, erfordern jedoch die manuelle Erstellung von Domänenmodellen durch Experten, was oft mit erheblichem Aufwand verbunden ist (menschliches Eingreifen ist erforderlich, um Objekte, Prädikate und Aktionsdefinitionen festzulegen).

Außerdem gehen diese Planer von einer deterministischen Ausführung der jeweiligen Aufgabe und einer vollständigen Kenntnis der Umgebung aus, was ihre Anwendbarkeit in realen, unvorhersehbaren Szenarien einschränkt. Jede Änderung des Ausgangszustands oder des Ziels erfordert manuelle Aktualisierungen der Aufgabenspezifikation, sodass eine spontane Anpassung an Änderungen nicht möglich ist. Dies macht sie in Umgebungen, die eine häufige Neukonfiguration erfordern, ineffizient.

Soll beispielsweise ein Roboter einen Tisch decken, könnte ein PDDL-basierter Planer eine optimale Reihenfolge für das Platzieren des Geschirrs generieren. Wenn sich jedoch die Situation ändert (z.B. die Tische werden an andere stellen gerückt), muss ein menschlicher Benutzer die Ausgangszustände oder das Ziel in der Aufgabenspezifikation manuell ändern. Wenn sich die Fähigkeiten des Roboters weiterentwickeln - beispielsweise durch den Erwerb einer neuen Fähigkeit zum Stapeln von Tellern - muss auch die Domänenspezifikation manuell aktualisiert werden, um eine entsprechende neue Aktion (gemäß der neuen Fähigkeit) einzuführen.

Ein solcher manueller Eingriff lässt sich in dynamischen Umgebungen, in denen häufige Zustandsänderungen auftreten, nur schlecht skalieren, was die Effektivität symbolischer Planer in realen Anwendungen einschränkt.

Andererseits haben sich LLMs als vielversprechend erwiesen, um eine Brücke zwischen dem Verständnis natürlicher Sprache und symbolischem Denken zu schlagen. Frameworks wie LLM+P und NL2Plan haben die Fähigkeit von LLMs unter Beweis gestellt, Eingaben in natürlicher Sprache in strukturierte Darstellungen (z. B. Domänenmodelle und Pläne) unter Verwendung mehrerer Formate wie PDDL oder Python-Code zu übersetzen.

Diese Ansätze haben jedoch Schwierigkeiten, die Konsistenz aufrechtzuerhalten, Zustandsänderungen zu verfolgen und iterative Korrekturen zu handhaben. Ihnen fehlen wesentliche Komponenten wie die rückkopplungsgesteuerte Verfeinerung und der persistente Speicher, die für die Anpassung an sich entwickelnde Aufgabenanforderungen und die Aufrechterhaltung der Konsistenz im gesamten Planungsablauf von entscheidender Bedeutung sind.

Ein LLM-basierter Planer könnte beispielsweise die Schritte "Teller aufheben und auf den Tisch stellen" generieren, aber wenn während der Aufgabe eine neue Anforderung an die Tellerfarbe hinzukommt (z. B. wenn der Benutzer ausdrücklich einen "roten Teller" auswählen möchte), hat er Schwierigkeiten, diese neue Anforderung zu berücksichtigen, ohne seinen Planungsprozess explizit zurückzusetzen.

Insgesamt werden bestehende Ansätze zur Planung durch begrenzte Modularität, das Fehlen robuster Fehlerkorrekturmechanismen und eine schlechte Anpassungsfähigkeit an sich verändernde Umgebungen behindert. Diese Einschränkungen machen Steuerungen für technische Systeme anfällig und verhindern eine effektive Skalierung, um den Anforderungen von risikoreichen Umgebungen gerecht zu werden, die eine kontinuierliche Anpassung erfordern, wie z. B. in der Robotik, der medizinischen Betreuung und der Automatisierung.

Um eine möglichst autonome (mit keinem oder wenige Eingriff durch menschliche Experten) und zugleich zuverlässige Planung zu ermöglichen wird, gemäß verschiedenen Ausführungsformen ein Feedbackgesteuerter Multi-Agenten-Ansatz mit einer modularen und strukturierten Architektur bereitgestellt, der ein oder mehrere LLMs mit symbolischem Schlussfolgern (d.h. einem symbolischen Planer) kombiniert.

Anstatt sich auf menschliche Experten zu verlassen, die Planungsmodelle manuell aktualisieren, oder von LLMs zu erwarten, dass sie vollständige Pläne erstellen, werden gemäß dem bereitgestellten Ansatz spezialisierte Agenten (d.h. Planungsmodule, also Software-Agenten, z. B. in Form oder gestützt von ein oder mehreren LLMs) eingesetzt, Planungskomponenten autonom zu generieren, validieren und verfeinern.

Jeder dieser Agenten konzentriert sich auf einen bestimmten Teil der Aufgabenbeschreibung - wie die Erzeugung des Domänenmodells, die Festlegung der Anfangsbedingungen oder die Anpassung der Ziele- während Feedbackschleifen zwischen den Agenten für Anpassungsfähigkeit und Korrektheit der Aufgabenbeschreibung sorgen. Ein symbolischer Planer übernimmt dann die Planung auf der Grundlage der von den Agenten gelieferten Aufgabenbeschreibung.

Dies reduziert den manuellen Arbeitsaufwand, verbessert die Skalierbarkeit und macht strukturierte Planung auch für Nicht-Experten zugänglich, indem es (durch die Verwendung von LLMs) Benutzern ermöglicht, in natürlicher Sprache mit dem jeweiligen Planungssystem (das den bereitgestellten Planungsansatz verwendet) zu interagieren, während gleichzeitig die Zuverlässigkeit durch symbolisches Schlussfolgern (wie es ein symbolischer Planer durchführt) gewährleistet wird, da die eigentliche Planung durch einen symbolischen Planer erfolgt.

Die modulare Architektur ermöglicht eine nahtlose Anpassung an neue Domänen oder die Integration in andere Planungssysteme mit minimaler Neukonfiguration. Dadurch lässt sich das Planungs-Framework leicht auf verschiedene Anwendungen erweitern, darunter selbstfahrende Autos, Drohnenlieferungen und Industrierobotik, ohne dass größere Änderungen erforderlich sind.

Das Planungssystem verwendet Feedbackschleifen zwischen den Agenten, um sicherzustellen, dass alle Komponenten des Planungsproblems kontextbezogen aufeinander abgestimmt bleiben. Dadurch werden Fehler bei der Planerstellung und -ausführung minimiert und gleichzeitig iterative Verbesserungen ermöglicht, d.h. die Agenten kommunizieren und verfeinern ihre Ergebnisse iterativ durch Feedbackschleifen, wodurch Konsistenz und Anpassungsfähigkeit an sich entwickelnde Szenarien oder Benutzereinschränkungen gewährleistet werden.

Wenn beispielsweise in einem Lagerautomatisierungssystem ein Agent, der für die Bestandsverfolgung zuständig ist, einen fehlenden Artikel entdeckt, kann er eine Anfrage an einen menschlichen Benutzer auslösen und das Planungsproblem auf der Grundlage der Antwort anpassen (die nicht unbedingt von einem Experten für Planung gegeben werden muss). Dadurch wird sichergestellt, dass der Planungsprozess mit dem aktuellen Zustand des Lagers übereinstimmt, wodurch Störungen minimiert und die Effizienz aufrechterhalten wird.

Im Gegensatz zu statischen symbolischen Planern, die manuelle Aktualisierungen für neue Einschränkungen oder sich entwickelnde Ziele erfordern, passt sich das Planungssystem somit automatisch an neue oder unsichere Aufgabenanforderungen an. Dadurch ist es in Umgebungen, in denen Echtzeit-Anpassungsfähigkeit von entscheidender Bedeutung ist, äußerst effektiv. Beim autonomen Parken kann sich ein selbstfahrendes Auto, das ein solches Planungssystem verwendet, während des Parkvorgangs an unvorhergesehene Einschränkungen anpassen. Wenn das Auto beispielsweise zunächst plant, an einem bestimmten Ort zu parken, aber ein Hindernis erkennt (z. B. ein falsch geparktes Fahrzeug oder einen Fußgänger, der den Weg kreuzt), kann das Planungssystem seine Parkstrategie verfeinern, indem es seine Manöver anpasst oder einen geeigneten Platz in der Nähe auswählt - ohne dass ein Eingreifen von außen erforderlich ist. Diese Anpassungsfähigkeit sorgt für reibungsloseres Parken in dynamischen Umgebungen, in denen sich die Bedingungen unvorhersehbar ändern können.

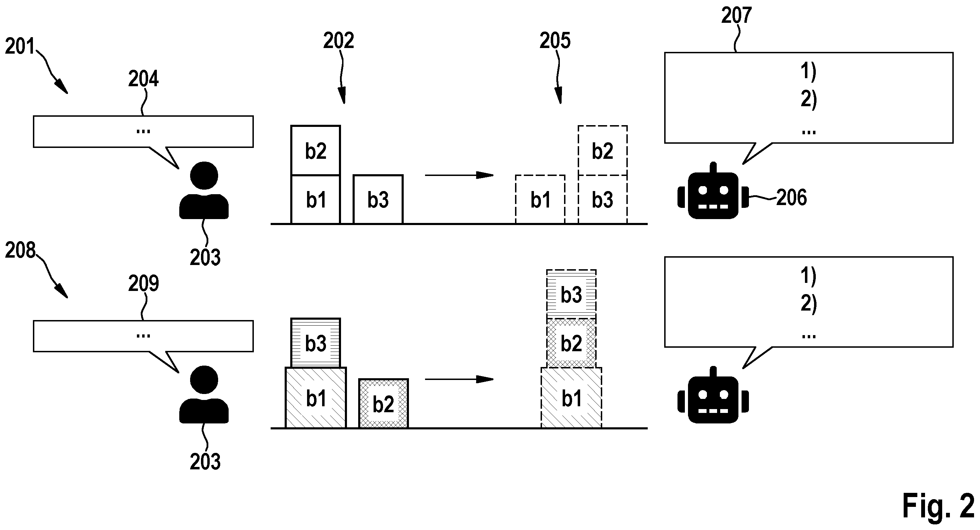

Figur 2 veranschaulicht ein Beispiel, bei dem ein Planungsproblemmodell angepasst werden muss.

In einer ersten Steuersituation 201 sind in einer Umgebung, z. B. des Roboterarms 101, drei Behälter (bezeichnet mit b1, b2, b3) vorhanden. Im Anfangszustand 202 befindet sich b2 auf b1 und ein Benutzer 203 formuliert (in natürlicher Sprache) die Aufgabe 204, dass b2 auf b3 gestapelt werden soll, d.h. ein Zielzustand 205 erreicht werden soll, bei dem b2 auf b3 ist.

Ein Planer 206 erstellt für dieses Ziel einen Plan 207 und löst eine Steuerung aus, der diesem Plan folgt.

In einer zweiten Steuersituation 208 sind wiederum drei Behälter (bezeichnet mit b1, b2, b3) vorhanden, wobei in diesem Beispiel b3 auf b1 gestapelt ist. Außerdem unterscheiden sich die Behälter optisch (d.h. im Behälteraussehen z. B. in der Farbe), hier dargestellt durch Diagonalschraffur, Kreuzschraffur und Horizontalschraffur sowie in der Größe.

Der Benutzer 203 formuliert (in natürlicher Sprache) nun die Aufgabe 209, dass ein Turm aus den drei Behältern gebildet werden soll, mit dem größten Behälter ganz unten, dem kreuzschraffierten in der Mitte und dem horizontalschraffierten ganz oben.

Geht man von einem Domänenmodell aus, das ausreichend war, um die erste Steuersituation 201 zu beschreiben, dann gibt es in diesem beispielsweise das Prädikat "Behältergröße" und "Behälteraussehen" nicht, d.h. das Domänenmodell muss durch diese Prädikate erweitert werden und es müssen ihnen Werte im Anfangszustand und im Endzustand zugewiesen werden.

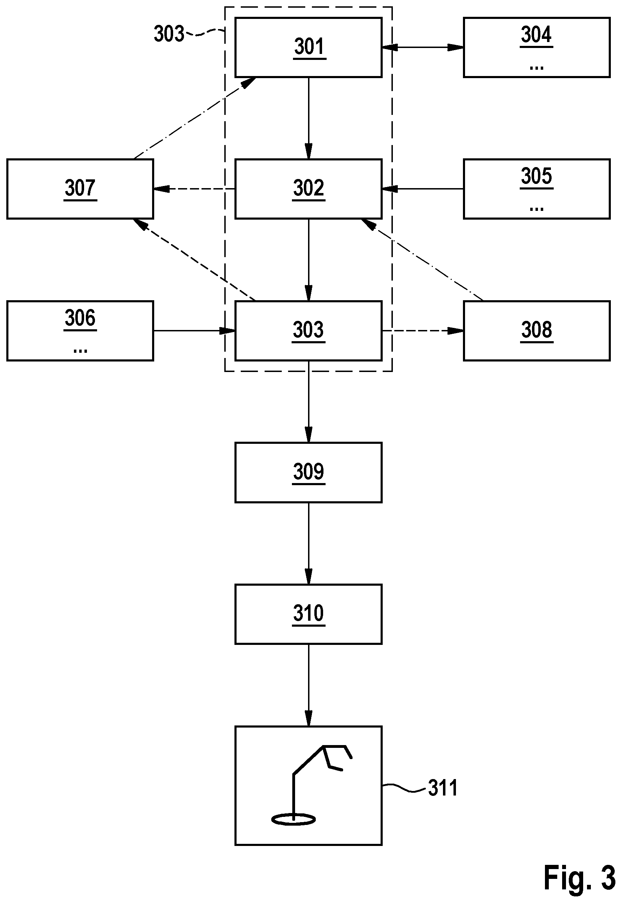

Figur 3 veranschaulicht ein Planungssystem 300 gemäß einer Ausführungsform (z.B. implementiert von der Steuereinrichtung 106) mit einer Multi-Agenten-Planungs-Framework-Architektur.

Im Ausführungsbeispiel von Figur 3 arbeiten in dem Planungssystem 300 drei spezialisierte Agenten - ein Domänenmodellgenerator 301, ein Anfangszustandsmodellgenerator 302 und ein Zielzustandsmodellgenerator 303 - zusammen, um iterativ ein kohärentes und strukturiertes Planungsproblemmodell 309 (in einem für einen symbolischen Planer 310 geeigneten Format, z. B. JSON, PDDL oder als Python-Code, zu erstellen. Jeder Agent 301, 302, 303 ist für einen bestimmten Aspekt der Planungsaufgabe verantwortlich:
- Der Domänenmodellgenerator 301 formuliert das Domänenmodell (d.h. das Modell für die Umgebung (und damit für mögliche Steuersituationen) und mögliche Aktionen, die das zu steuernde technische System (z.B. der Roboterarm 101) durchführen kann, ausgehend von dem Planungssystem 300 empfangener Domäneninformation 304 (z.B. zumindest zum Teil in natürlicher Sprache).
   Die Modellierung der Domäne kann beispielsweise Folgendes umfassen: Identifizierung von (geeigneten) Prädikaten zur Darstellung von Zuständen und Eigenschaften der Umgebung (z.B. von Objekten) und Übergängen zwischen Zuständen in der Umgebung. Definition von anwendbaren Aktionen und deren Voraussetzungen und Auswirkungen. Identifizierung von Objekten und deren Eigenschaften. Spezifizierung von Einschränkungen.
   Für die erste Steuersituation 201 enthält die Domäneninformation 304 beispielsweise eine Domänenbeschreibung (gekürzt) wie
   "Die Domäne geht von einer Welt aus, in der Behälter mit Hilfe eines Roboterarms gestapelt und entstapelt werden können, der Behälter aufnehmen und auf den Boden oder auf andere Behälter stellen kann.
   Die Aktionen umfassen:
      - Aufnehmen: einen Behälter vom Boden aufheben
         Vorbedingungen:
            - Behälter ist frei (kein anderer Behälter steht darauf)
            - Behälter steht auf dem Boden
            - Arm ist leer
         Auswirkungen:
            - Arm hält jetzt den Behälter
            - Behälter ist nicht mehr frei
            - der Behälter steht nicht mehr auf dem Boden
            - Der Arm ist nicht mehr leer
      - Ablegen: Abstellen eines gehaltenen Behälters auf dem Boden
      - Stapeln: einen gehaltenen Behälter auf einen anderen Behälter stellen
      - Entstapeln ..."
- Der Anfangszustandsmodellgenerator 302 spezifiziert den Anfangszustand des zu steuernden Systems auf der Grundlage einer von dem Planungssystem 300 empfangener Anfangszustandsbeschreibung 305 (z.B. zumindest zum Teil in natürlicher Sprache).
   Für die erste Steuersituation 201 aus Figur 1 ist die Anfangszustandsbeschreibung 305 beispielsweise:
   "Es gibt drei Behälter b3, b2 und b1. b2 befindet sich auf b1. Der Roboterarm ist leer"
- Der Zielzustandsmodellgenerator 303 spezifiziert das gewünschte Ergebnis auf der Grundlage einer von dem Planungssystem 300 empfangenen Zielzustandsbeschreibung 306 (z.B. zumindest zum Teil in natürlicher Sprache), die in Form der Beschreibung der Aufgabe vorliegen kann.
   Für die erste Steuersituation 201 aus Figur 1 ist die Zielzustandsbeschreibung 306 beispielsweise:
   "Ziel ist es, die Behälter in die folgende Konfiguration zu bringen: b2 soll auf b3 stehen. b1 soll sich daneben befinden."

Jeder Agent 301, 302, 303 liefert einen vom symbolischen Planer 310 verständlichen oder verwendbaren Teil des Planungsproblemmodells 309. Liefert beispielsweise jeder Agent 301, 302, 303 Python-Code, so könnten diese Teile (in Auszügen) beispielsweise wie folgt aussehen (die verschiedenen Funktionen und Variablen sind hier mit englischen Begriffen bezeichnet, wie in der Programmierung üblich):

### Domänenbeschreibung:

```
 from up_interface import add_action_effect, add_action_precondition,
 add_fluent_to_problem, create_action, create_fluent, create_problem, cre-
 ate_user_type, add_actions_to_problem
 from unified_planning.shortcuts import BoolType
  
 # Definiere Problem
 container_world_problem = create_problem("container_world")
  
 # Definiere notwenige Typen
 container = create_user_type("container") # Behälter, die manipuliert werden
 können
  
 # Definiere Fluente
 clear = create_fluent("clear", BoolType(), parameters={"b": container}) # kein
 Behälter darauf
 on_ground = create_fluent("on_ground", BoolType(), parameters={"b": contain-
 er}) # Behälter auf dem Boden
 ...
 # Füge Fluente dem Problem hinzu
 add_fluent_to_problem(container_world_problem, clear)
 add_fluent_to_problem(container_world_problem, on_ground)
  
 # Definiere Aktionen
 # pickup: Nehme Behälter vom Boden auf
 pickup = create_action("pickup", {"b": container})
 # Vorbedingungen
 add_action_precondition(pickup, clear(pickup.b)) # der Behälter muss frei sein
 ...
 # Effekte
 add_action_effect(pickup, holding(pickup.b), True) # Arm hält jetzt den Behälter
 ...
  
 # Abstellen: Platziere gehaltenen Behälter auf dem Boden
 putdown = create_action("putdown", {"b": container})
 # Vorbedingungen
 ...
  
 # Füge Aktionen dem Problem hinzu
 add_actions_to_problem(container_world_problem, [pickup, putdown, stack, un-
 stack])
 
```

### Anfangszustand:

```
 from up_interface import add_objects_to_problem, create_object,
 set_initial_value
  
 # Erzeuge Behälter-Objekte
 b1 = create_object("b1", container)
 b2 = create_object("b2", container)
 b3 = create_object("b3", container)
 # Füge Objekte dem Problem hinzu
 add_objects_to_problem(container_world_problem, [b1, b2, b3])
  
 # Setze Anfangswerte für Fluente
 # Behälterpositionen
 set_initial_value(container_world_problem, on(b2, b1), True) # b2 auf b1
 ...
  
 # Frei-Status
 set_initial_value(container_world_problem, clear(b2), True) # b2 ist frei
 ...
  
 # Armstatus
 set_initial_value(container_world_problem, arm_empty(), True) # Arm ist leer
  
 # Behälter werden nicht gehalten
 set_initial_value(container_world_problem, holding(b1), False) # Arm hält nicht
 b1
 ...
```

Der Code für den Zielzustand kann analog zum Code für den Anfangszustand lauten.

In PDDL könnte das Planungsproblemmodell 309 beispielsweise wie folgt lauten (wobei wiederum jeder Agent 301, 302, 303) einen entsprechenden Teil beigetragen hat):

```
(define (domain container_world-domain)
 (:requirements :strips :typing)
 (:types container)
 (:predicates (clear ?b - container) (on_table ?b - container) (holding ?b - con-
 tainer) (on ?b1 - container ?b2 - container) (arm_empty))
 (:action pickup
 :parameters ( ?b - container)
 :precondition (and (clear ?b) (on_table ?b) (arm_empty))
 :effect (and (holding ?b) (not (clear ?b)) (not (on_table ?b)) (not (arm_empty))))
 (:action putdown
 :parameters ( ?b - container)
 :precondition (and (holding ?b))
 :effect (and (clear ?b) (arm_empty) (on_table ?b) (not (holding ?b))))
 (:action stack
 :parameters ( ?b1 - container ?b2 - container)
 :precondition (and (holding ?b1) (clear ?b2))
 :effect (and (arm_empty) (clear ?b1) (on ?b1 ?b2) (not (clear ?b2)) (not (holding
 ?b1))))
 (:action unstack
 :parameters ( ?b1 - container ?b2 - container)
 :precondition (and (on ?b1 ?b2) (arm_empty) (clear ?b1))
 :effect (and (holding ?b1) (clear ?b2) (not (on ?b1 ?b2)) (not (clear ?b1)) (not
 (arm_empty))))
 )
  
 (define (problem container_world-problem)
 (:domain container_world-domain)
 (:objects
  b1 b2 b3 - container
 )
 (:init (on b2 b1) (on_ground b3) (on_ground b1) (clear b2) (arm_empty))
 (:goal (and (on b2 b3) (on_ground b3) (on_ground b1)))
 )
```

Das Planungsproblemmodell 309 wird an den symbolischen Planer 310 geliefert, der einen Plan mit durchzuführenden Aktionen ermittelt und diese an eine (Low-Level-)Steuerungseinheit 310, z. B. einen Regler, gibt, damit diese sie ausführt und somit das technische System 311 gemäß dem Plan steuert.

Die Eingaben 304, 305, 306 an das Planungssystem 300, die jedem Aspekt (Domäne, Anfangszustand und Ziel) entsprechen, werden (z.B. von einer Eingangsschnittstelle bzw. einem Eingangsdatenvorverarbeitungsmodul) dem jeweiligen Agenten 301, 302, 303 zugeführt. Darüber hinaus ermöglichen Aktualisierungsanforderungssignale (in Figur 3 dargestellt als gestrichelte und strichpunktierte Pfeile) den Agenten, Änderungen oder Korrekturen untereinander zu kommunizieren bzw. voneinander anzufordern, um sicherzustellen, dass Änderungen in einer Komponente (z. B. eine neue Einschränkung oder aktualisierte Informationen) entsprechende Anpassungen in den anderen Komponenten auslösen.

Beispielsweise können der Anfangszustandsmodellgenerator 302 und der Zielzustandsmodellgenerator 303 eine Domänenmodellaktualisierung 307 vom dem Domänenmodellgenerator 301 anfordern. Dies kann beispielsweise wie beim im Zusammenhang mit Figur 2 genannten Beispiel auftreten, wenn z.B. der Zielzustandsmodellgenerator 303 feststellt, dass er den Zielzustand nicht ausreichend formulieren kann (z.B. Behälter mit bestimmten Aussehen an bestimmter Position), weil dem Domänenmodell ein entsprechendes Prädikat (z.B. Behälteraussehen) fehlt. Ähnlich könnte der Zielzustandsmodellgenerator 303 vom Anfangszustandsmodellgenerator 302 eine Anfangszustandsmodellaktualisierung 308 anfordern, wenn beispielsweise das Anfangszustandsmodell eine Eigenschaft nicht beschreibt, die im Zielzustandsmodell beschrieben ist oder beschrieben werden muss (und das Anfangszustandsmodell und das Zielzustandsmodell somit noch nicht konsistent sind.)

Das Planungssystem 300 erhält die Eingaben 304, 305, 306 in verschieden Formaten, wie z.B. Beschreibungen in natürlicher Sprache, strukturierte Daten oder Sensorsignale (z.B. Bilder von Kameras, LiDAR, Radar und Audioeingaben), die Informationen über die Steuersituation und/oder den Anfangszustand liefern. Es verarbeitet diese Eingaben und wandelt sie in strukturierte Darstellungen (z. B. Prädikate, Fluenten, Zustände, Aktionen) um, die als Grundlage für die Planung dienen.

Mögliche Eingabetypen (und die entsprechend dafür von den Agenten 301, 302, 303 implementierten Modelle und/oder (ggf. den Agenten 301, 302, 303 vorgeschaltete) Verarbeitungstechniken) sind:
- Textbasierte Eingaben: Schriftliche Zusammenfassungen und Beschreibungen, z.B. in Bezug auf die Anfangssituation (d.h. aktuelle Situation) oder mögliche Interaktionsschemata mit verwandten Anwendungen (z.B. Anwendungsprogrammierschnittstellen (APIs)). Diese Art von Daten kann durch Sprachmodelle (z.B. LLMs) oder Texteinbettungsmodelle verarbeitet werden. Gemäß verschiedenen Ausführungsformen ist die Eingabe an jeden der Agenten 301, 302, 303 zumindest teilweise textbasiert.
- Bildbasierte Eingaben: Digitale Bilder und Video-Feeds werden mithilfe von Computer-Vision- oder Deep-Learning-Techniken (wie sie die Agenten 301, 302, 303 implementieren können) verarbeitet, um relevante räumliche und semantische Informationen zu extrahieren.
- Radar- und LiDAR-Eingaben: Sensordaten von LiDAR und Radar können mithilfe von Deep-Learning-Modellen (z. B. 3D-Objekterkennungsnetzwerke und Szenendarstellungsmodelle) codiert werden, um strukturierte Darstellungen der Umgebung zu erstellen. Dadurch kann das Planungssystem 300 Objekte erkennen, Entfernungen schätzen und dynamische Veränderungen erkennen.
- Audioeingaben: Audiosignale, wie gesprochene Befehle oder Umgebungshinweise, werden beispielsweise von dem Planungssystem 300 mithilfe von Sprach-zu-Text-Modellen in Text umgewandelt, sodass mittels NLP-Techniken (Natural Language Processing) Benutzerbefehle interpretiert werden können oder Informationen über die Steuersituation abgeleitet werden können (ähnlich wie bei textbasierten Eingaben).

Die Planung wird in Planungsunteraufgaben unterteilt, die je nach Komplexität und Anforderungen der durchzuführende (Steuer-)Aufgabe Problems grob- oder feinkörnig sein können (z.B. jeweils für größere oder kleinere Teil(steuer)aufgaben der durchzuführenden (Steuer-)aufgabe durchgeführt werden können). Planungsunteraufgaben sind:
- Generierung eines Domänenmodells (durch den Domänenmodellgenerator 301)
- Spezifikation von Anfangsbedingungen (durch den Anfangszustandsmodellgenerator 302)
- Spezifizierung von Zielen (durch den Zielzustandsmodellgenerator 303)
- Auflösung von Inkonsistenzen zwischen Planungskomponenten (z.B. durch Austausch von entsprechendem Feedback (d.h. Rückmeldungen, z.B. Anforderungen) zwischen den Agenten 301, 302, 303).

Wie oben erläutert werden die Planungsunteraufgaben der Domänenmodellerzeugung, Anfangszustandsspezifikation und Zielzustandsspezifikation den spezialisierten Agenten 301, 302, 303 zugewiesen. Diese arbeiten autonom können aber über einen gemeinsamen Speicher oder alternative Kommunikationskanäle wie Anwendungsprogrammierschnittstellen (APIs), Interrupts und Message-Passing-Schnittstellen kommunizieren und so zusammenarbeiten. Die Agenten 301, 302, 303 arbeiten iterativ durch Verfeinerung und Feedbackschleifen zusammen, in denen sie ihre Ergebnisse (mittels Feedback) kritisieren, aktualisieren und aufeinander abstimmen (durch Kommunikation untereinander, beispielsweise unter Verwendung der oben genannten Kommunikationsmöglichkeiten), bis ein konsistentes Planungsproblemmodell 309 erstellt ist. Diese Zusammenarbeit gewährleistet Kohärenz, Konsistenz und Anpassungsfähigkeit über alle Komponenten des Planungsproblems hinweg.

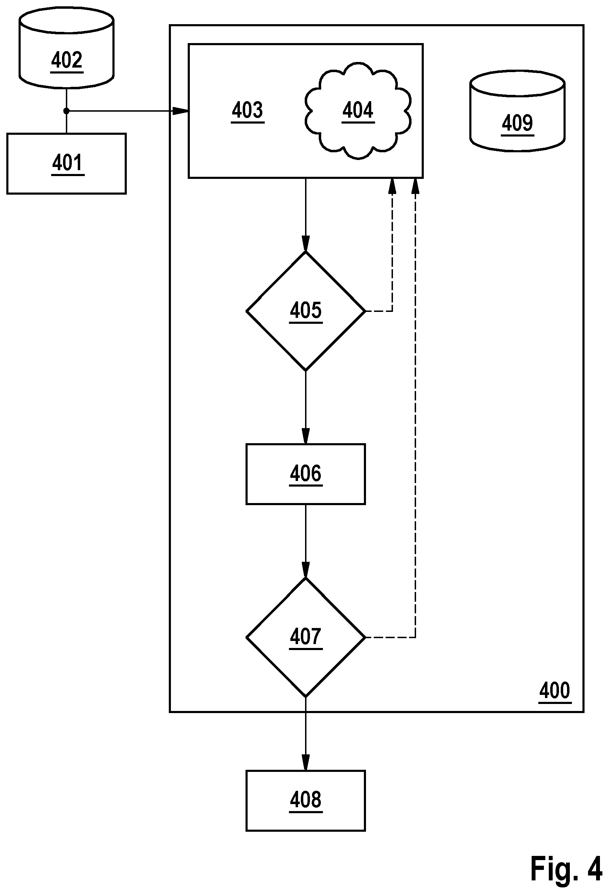

Figur 4 zeigt ein Beispiel für die Architektur eines Agenten 400 (die für eine oder mehrere der Agenten 301, 302, 303 verwendet werden kann).

Der Agent 400 empfängt einen Eingabe-Prompt 401, den er mittels eines Erzeugungsmoduls 403, das für die Erstellung von Ausgaben (je nach Planungsteilaufgabe) verantwortlich ist, mittels eines LLMs realisiert wird und durch externe Tools 404 (optional) ergänzt werden kann, um seine generativen Fähigkeiten zu verbessern.

Eingabeinformationen aus dem Eingabe-Prompt 401 und optional Inhalte aus einem prozeduraler Speicher 402 (für langfristige, gesammelte Erfahrungen) fließen in den von dem Erzeugungsmodul 403 durchgeführten Erzeugungsprozess ein und stellen sicher, dass sowohl unmittelbare Anweisungen als auch ggf. historischer Kontext verfügbar sind. Sobald das Erzeugungsmodul 403 eine Ausgabe (entsprechend der von dem Agenten 400 durchzuführenden Planungsteilaufgabe) generiert wurde, durchläuft sie optional ein Fehlerprüfmodul 405, in dem der Agent 400 die Korrektheit und Konsistenz der Ausgabe überprüft. Wenn Fehler gefunden werden, sendet das Fehlerprüfmodul 405 über eine Rückkopplungsschleife Signale zur iterativen Verbesserung an das Erzeugungsmodul 403 zurück.

Ggf. nach iterativer Verbesserung wird die Ausgabe dann optional an ein Selbstreflexionsmodul 406 weitergeleitet, wo die Ausgabe durch interne Bewertung und Selbstkritik weiter verfeinert wird. Nach der Selbstreflexion wird optional in einem Bewertungsmodul 407 beurteilt, ob die Ausgabe einen vorab festgelegten Qualitätsgrenzwert erreicht, ansonsten erfolgt ein negatives Feedback an das Erzeugungsmodul 403. Nur Ergebnisse, die diesen Grenzwert übertreffen, gelangen, werden von dem Agenten 400 als Endausgabe 408 ausgegeben.

Während dieses Prozesses speichert ein Kontextspeicher kontinuierlich die jüngsten Interaktionen und Daten, um sicherzustellen, dass der Agent über mehrere Iterationen hinweg kohärent bleibt. Dies dient einer effektiven Zusammenarbeit zwischen den Agenten, da sie so in der Lage sind, kohärent auf externe Anfragen zu reagieren und die Abstimmung zwischen den Komponenten aufrechtzuerhalten. Das Design mit seinen integrierten Feedbackschleifen und optionalen Erweiterungsmodulen unterstützt die iterative Verfeinerung und das dynamische Lernen, wodurch der Agent 400 sowohl robust als auch anpassungsfähig für komplexe Planungsaufgaben wird.

Der Agent kann einen kontextbezogenen Speicher 409 aufweisen, der für die Abstimmung zwischen Interaktionen (z.B. mit anderen Agenten), Rückmeldungen und Aufgaben sorgt, indem er aufgabenbezogene Informationen und aktuelle Interaktionen speichert. Es kann entweder den gesamten Verlauf oder eine Teilmenge der letzten Interaktionen (z. B. die letzten n Interaktionen) speichern. Es stellt sicher, dass Agenten die Kohärenz ihrer Ausgaben aufrechterhalten und sich dynamisch an sich entwickelnde Eingaben oder Einschränkungen anpassen.

Anhand des Planungsproblemmodells 309 erstellt der symbolische Planer 310 einen sequenziellen Plan. Das Erstellen des Plans umfasst das Bewerten von Aktionen, Zuständen und Übergängen, um sicherzustellen, dass der Plan den definierten Einschränkungen und Zielen entspricht.

Der Plan wird kann in verschiedenen Formaten dargestellt werden, die für die Ausführung oder Kommunikation geeignet sind. Beispiele hierfür sind Anweisungen in natürlicher Sprache (für menschliche Bediener) und maschinenlesbare Formate (für autonome Systeme).

Das Planungssystem 300 kann zusätzliche Komponenten enthalten, um die Leistung zu verbessern, die jedoch für die Kernfunktionalität nicht unbedingt erforderlich wie
- den prozeduralen Speicher 402: Dieser erfasst Lehren aus früheren Planungsproblemen, einschließlich Benutzerfeedback, Korrekturen für wiederkehrende Fehler und Strategien, die zu erfolgreichen Ergebnissen geführt haben. Eine Komponente für prozedurales Gedächtnis (d.h. für die Speicherung und den Abruf von Abläufen zur Erledigung von Aufgaben) ermöglicht dies ein lebenslanges Lernen, indem Wissen aus der Erledigung (speziell der Planung) von früheren Aufgaben und Korrekturen, die dabei aufgetreten sind, gespeichert wird. Dadurch kann sich das Planungssystem im Laufe der Zeit verbessern, indem es wiederholte Fehler vermeidet und bewährte Verfahren einbezieht. Beispielsweise kann ein Robotersystem, das in einem Logistikzentrum eingesetzt wird, aus früheren Fehlerkorrekturen lernen und so kann sich seine Effizienz verbessern. In einem Szenario, in dem ein Roboter Eier aus einem Kühlschrank holt, ermöglicht das prozedurale Gedächtnis dem System beispielsweise zu erkennen, dass das anschließende Schließen der Kühlschranktür ein allgemein erwartetes Verhalten ist, auch wenn es nicht ausdrücklich erforderlich ist, um das Ziel zu erreichen.
- die Selbstreflexions-/Kritikmechanismen des Selbstreflexionsmoduls 406 bzw. des Bewertungsmoduls 407: Das Planungssystem kann einen strukturierten Selbstreflexionsprozess implementieren, um die Ausgaben der der Agenten 301, 302, 303 der Erzeugungsmodule 403 iterativ zu verfeinern. Nach der Generierung einer Antwort bewertet ein interner Kritiker (z. B. ein LLM) diese anhand vordefinierter Kriterien wie Korrektheit, Kohärenz und Aufgabenausrichtung. Falls erforderlich, wird die Ausgabe anhand des Feedbacks des Kritikers aktualisiert und der Erzeugungsprozess wird wiederholt, bis ein akzeptabler Qualitätsschwellenwert erreicht ist. Diese iterative Verfeinerung verbessert die Genauigkeit, Robustheit und Anpassungsfähigkeit.

Das Planungssystem 300 je nach Komplexität der Steuerungsaufgabe unterschiedlich konfiguriert werden und Agenten 301, 302, 303 können auch kombiniert werden, z.B.:
- Grobe Konfiguration: In einfacheren Szenarien arbeitet eine kleine Anzahl von Agenten (z.B. drei) zusammen, um das Domänenmodell, den Anfangszustand und die Ziele zu definieren.
- Feine Konfiguration: In komplexeren Szenarien können Planungsteilaufgaben weiter unterteilt werden.

Die mehrere Agenten arbeiten zusammen, um sicherzustellen, dass das Planungsproblemmodell kohärent definiert und kontextbezogen mit den Anforderungen abgestimmt ist. Für die Kommunikation zwischen den Agenten für diese Zusammenarbeit können verschiedene Kommunikationsarchitekturen verwendet werden, darunter Tool-Calling-APls, Message-Passing-Schnittstellen, ausnahmebasierte Signalisierung, strukturierte Ausgabegenerierung (z. B. JSON, XML), getaggter Text und Schlüsselwörter.

Als symbolischer Planer 310 können verschiedene Ansätze unterstützt werden und das Planungssystem 300 ist somit an verschiedene Anwendungen anpassbar. Mögliche symbolische Planer sind z.B. auf PDDL-basierte Planer, andere heuristische Planer und zeitliche Planer.

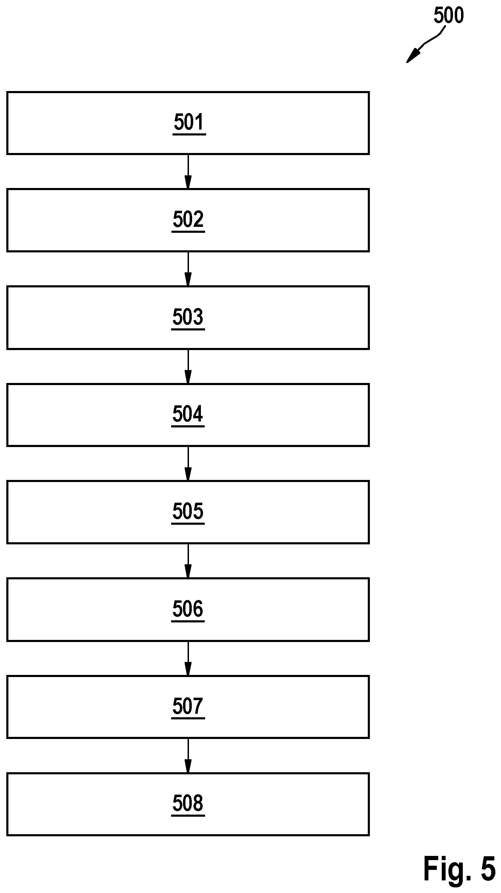

Zusammengefasst wird gemäß verschiedenen Ausführungsformen ein Verfahren bereitgestellt, wie in Figur 5 dargestellt.

Figur 5 zeigt ein Ablaufdiagramm 500, das ein Verfahren zum Steuern eines technischen Systems gemäß einer Ausführungsform darstellt.

In 501 wird eine textuelle Domänenbeschreibung empfangen, die Aktionen beschreibt, die von dem technischen System ausgeführt werden können und Zustandseigenschaften des technischen Systems (z.B. ob ein Behälter auf einem anderen Behälter ist) ändern.

In 502 wird gemäß der Domänenbeschreibung mittels eines Domänenmodellgenerators ein Domänenmodell erzeugt (d.h. das Domänenmodell spezifiziert Eigenschaften und mögliche Aktionen wie in der Domänenbeschreibung beschrieben).

In 503 wird eine textuellen Anfangszustandsbeschreibung empfangen, die einen Anfangszustand des technischen Systems beschreibt.

In 504 wird gemäß der Anfangszustandsbeschreibung ein Anfangszustandsmodell mittels eines Anfangszustandsmodellgenerators erzeugt.

In 505 wird eine textuelle Zielzustandsbeschreibung, die einen Zielzustand des technischen Systems beschreibt, empfangen.

In 506 wird gemäß der Zielzustandsbeschreibung ein Zielzustandsmodells mittels eines Zielzustandsmodellgenerators erzeugt.

Der Domänenmodellgenerator, der Anfangszustandsmodellgenerator und der Zielzustandsmodellgenerator sind mittels mindestens eines generativen Sprachmodells (z.B. jeweils mittels eines jeweiligen generativen Sprachmodells) implementiert, das die Domänenbeschreibung, die Anfangszustandsbeschreibung bzw. die Zielzustandsbeschreibung verarbeitet.

Bei der Erzeugung der Modelle tauschen der Domänenmodellgenerator, der Anfangszustandsmodellgenerator und der Zielzustandsmodellgenerator Feedback zu dem Domänenmodell, dem Anfangszustandsmodell und/oder dem Zielzustandsmodell aus und passen das Domänenmodell, das Anfangszustandsmodell bzw. das Zielzustandsmodell an, bis das Domänenmodell, das Anfangszustandsmodell und das Zielzustandsmodell konsistent und/oder vollständig sind (d.h. sie zusammen ein konsistentes und/oder vollständiges Planungsproblemmodell ergeben).

In 507 wird ein (Steuerungs-)Plan mittels eines symbolischen Planers durch Zuführen des Domänenmodells, des Anfangszustandsmodells und des Zielzustandsmodells (z.B. kombiniert zu einem Planungsproblemmodell) zu einem symbolischen Planer erstellt.

In 508 wird das technische System gemäß dem erstellten Plan gesteuert.

Es sollte beachtet werden, dass die Reihenfolge der Schritte in Figur 5 nur ein Beispiel ist und auch andere Reihenfolgen möglich sind. Beispielsweise können auch erst alle Beschreibungen empfangen werden und dann gleichzeitig die Modelle erzeugt werden. Es kann auch zwischen den Schritten hin- und hergewechselt werden, z. B. weil Feedback durch einen anderen Schritt erfolgt. Beispielsweise wird das Domänenmodell noch einmal angepasst, nachdem es zuvor erzeugt wurde, wenn das nötig wird.

Das Verfahren von Figur 5 kann durch einen oder mehrere Computer mit einer oder mehreren Datenverarbeitungseinheiten durchgeführt werden. Der Begriff "Datenverarbeitungseinheit" kann als irgendein Typ von Entität verstanden werden, die die Verarbeitung von Daten oder Signalen ermöglicht. Die Daten oder Signale können beispielsweise gemäß mindestens einer (d.h. einer oder mehr als einer) speziellen Funktion behandelt werden, die durch die Datenverarbeitungseinheit durchgeführt wird. Eine Datenverarbeitungseinheit kann eine analoge Schaltung, eine digitale Schaltung, eine Logikschaltung, einen Mikroprozessor, einen Mikrocontroller, eine Zentraleinheit (CPU), eine Graphikverarbeitungseinheit (GPU), einen Digitalsignalprozessor (DSP), eine integrierte Schaltung einer programmierbaren Gatteranordnung (FPGA) oder irgendeine Kombination davon umfassen oder aus dieser ausgebildet sein. Irgendeine andere Weise zum Implementieren der jeweiligen Funktionen, die hierin genauer beschrieben werden, kann auch als Datenverarbeitungseinheit oder Logikschaltungsanordnung verstanden werden. Es können ein oder mehrere der im Einzelnen hier beschriebenen Verfahrensschritte durch eine Datenverarbeitungseinheit durch eine oder mehrere spezielle Funktionen ausgeführt (z. B. implementiert) werden, die durch die Datenverarbeitungseinheit durchgeführt werden.

Das Verfahren ist also gemäß verschiedenen Ausführungen insbesondere computerimplementiert. Es kann automatisch ausgeführt werden.

Der bereitgestellte Steuerungsverfahren (bzw. ein Steuerungssystem oder Planungssystem, das gemäß einem solchen Steuerungsverfahren, insbesondere Planungsansatz, ausgestaltet ist) kann auf Planungsprobleme (und damit auf Steuerungsprobleme) in verschiedenen Bereichen angewendet werden, die eine dynamische, anpassungsfähige Planung erfordern können.

Das Steuerungsverfahren gemäß Figure 5 kann (neben den textuellen Beschreibungen) mit verschiedenen Daten arbeiten, die z.B. aus den folgenden Sensorsignalen abgeleitet werden:
- Digitale Bilddaten, einschließlich Video, Radar, LiDAR, Ultraschall, Bewegung, Wärmeabbildungen
- Audiosignale für sprachgesteuerte Aufgabenplanung oder Hinweise bezüglich der Umgebung

Das Verfahren gemäß Figur 5 kann in Steuerungssystemen bzw. autonomen Systemen verwendet werden, um Pläne als Reaktion auf sich verändernde Umweltbedingungen, benutzerspezifische Einschränkungen und benutzerspezifische Ziele zu erstellen und zu verfeinern und strukturierte Aufgabenrepräsentationen aus unstrukturierten Eingaben in natürlicher Sprache zu extrahieren.

Beispiele für Anwendungsfälle beinhalten:
- Automatisierte Erstellung und Ausführung von Montageabläufen in Fertigungsprozessen
- Terminplanung für Assistenzroboter in Gesundheitseinrichtungen oder in der personalisierten Pflege.
- Generierung sequenzieller Aufgaben zur Erfüllung von Benutzeranfragen.

Gemäß verschiedenen Ausführungsformen dient das Verfahren gemäß Figur 5 der langfristigen Aufgabenplanung, bei der ein intelligentes System eine Abfolge von Aktionen auf hoher Ebene generieren muss, um ein komplexes, mehrstufiges Ziel zu erreichen. Es konzentriert sich beispielsweise auf zielgerichtete Planung statt Bewegungsplanung und eignet sich daher für Szenarien, die strukturiertes Denken über längere Aufgaben erfordern, wie z. B. das Zusammenstellen von Mahlzeiten in einer Küche, die Durchführung mehrstufiger Montagevorgänge in der Fertigung oder die Ausführung von Arbeitsabläufen mit langem Zeithorizont im Gesundheitswesen. Gemäß verschiedenen Ausführungsformen werden Stärken von Large-Language-Modellen (LLMs) und klassischen symbolischen Planern kombiniert. Traditionelle symbolische Planer können optimale Aufgabenpläne erstellen, erfordern jedoch manuell erstellte Domänenmodelle und Problemspezifikationen. Diese Planer gehen von statischen Umgebungen und deterministischer Ausführung aus, wodurch sie für dynamische Aufgaben in der realen Welt, bei denen sich Ziele oder Anfangsbedingungen ändern können, ungeeignet sind. LLMs hingegen zeichnen sich durch die Verarbeitung unstrukturierter Eingaben in natürlicher Sprache und die Generierung strukturierter Ausgaben aus, haben jedoch Schwierigkeiten mit domänenspezifischem Denken, Anpassungsfähigkeit und Konsistenz. Das Verfahren gemäß Figur 5 integriert gemäß verschiedenen Ausführungsformen LLMs und symbolische Planer in ein einheitliches Multi-Agenten-Framework, in dem jeder Agent auf bestimmte Aufgaben spezialisiert ist. Die Modularität der von den Agenten ausgeführten Aufgaben ist äußerst flexibel und an die Komplexität des Planungsproblems anpassbar. In einer Konfiguration kann das Framework aus einer kleinen Anzahl von Agenten bestehen, z. B. einem Agenten zur Erstellung eines Domänenmodells (falls nicht bereits vorhanden) und einem anderen zur Definition der Problem- oder Aufgabenstellung (d.h. eines Planungsproblemmodells) auf der Grundlage des Domänenmodells. In komplexeren Szenarien kann eine Aufgabe in Teilaufgaben unterteilt werden (für die dann z.B. jeweils ein Planungsproblemmodell erstellt wird). Das Planungsproblemmodell wird von dem symbolischen Planer verarbeitet, d.h. es werden Aktionen geplant, und das jeweilige technische System wird dann derart gesteuert, dass diese geplanten Aktionen ausgeführt werden.

Gemäß verschiedenen Ausführungsformen arbeiten mehrere Agenten zusammen, um sicherzustellen, dass das Aufgabenproblem (insbesondere die Planung) Planungsproblem konsistent definiert und kontextbezogen auf die Anforderungen abgestimmt ist. Die Agenten kommunizieren und verfeinern ihre Ergebnisse iterativ durch Feedbackschleifen, wodurch Konsistenz und Anpassungsfähigkeit an sich entwickelnde Szenarien oder Benutzereinschränkungen gewährleistet werden. Dieser Planungsansatz ist besonders nützlich für Bereiche, die eine strukturierte, langfristige Entscheidungsfindung anstelle einer Bewegungsplanung in Echtzeit erfordern, z.B.:
- Haushaltsrobotik: z.B. Planung einer vollständigen Kochsequenz (z. B. ein Sandwich zubereiten, einen Tisch decken, eine Spülmaschine ausräumen).
- Industrielle Automatisierung: z.B. langfristige Aufgabenplanung in der Fertigung (z. B. Montage mehrerer Komponenten im Laufe der Zeit).
- Unterstützung im Gesundheitswesen: z.B. Durchführung mehrstufiger Patientenversorgungsroutinen, wie z. B. Medikamentenausgabe und Essensausgabe.
- autonome Serviceroboter: z.B. Hotel- oder Restaurantassistenten, die aufeinanderfolgende Serviceaufgaben planen (z. B. Vorbereitung, Ausgabe und Reinigung nach einer Mahlzeit).
- Autonomes Fahren: Handhabung komplexer, mehrstufiger Entscheidungsfindung beim autonomen Fahren.
- Autonomes Fliegen: z.B. mehrstufige Entscheidungsfindung bei der Lieferung per Drohne (z. B. Koordination der Landung in dicht besiedelten städtischen Gebieten).

Gemäß verschiedenen Ausführungsformen nutzt das Verfahren von Figur 5 grundlegende Prinzipien sowohl der Verarbeitung natürlicher Sprache (NLP) als auch der symbolischen Planung, um die Grenzen herkömmlicher Planungsansätze zu überwinden. Jüngste Fortschritte in der NLP und bei Large-Language-Modellen (LLMs) ermöglichen ein tieferes Verständnis der natürlichen Sprache und anderer text- oder bildbasierter Darstellungen und können als Grundlage des Planungsansatzes von Figur 5 gesehen werden.

LLMs bieten die Fähigkeit zur semantische Schlussfolgerung und Verständnis natürlicher Sprache. Sie verwenden vorab trainierte transformatorbasierte Architekturen, um unstrukturierte Eingaben in strukturierte Ausgaben abzubilden. Das Verfahren von Figur 5 baut auf dieser Fähigkeit auf, indem es mittels geeigneter Prompts LLM-generierte Ausgaben erzeugt, die in Einklang mit symbolischen Darstellungen von Planungsmodellen wie PDDL, Python-Code oder JSON sind.

Diese Prompts leiten die LLMs an, modulare und konsistente Planungskomponenten (eines Planungsmodells) zu generieren, die den syntaktischen und semantischen Anforderungen symbolischer Planer entsprechen und sowohl Kompatibilität als auch Genauigkeit gewährleisten.

Das Unified Planning Framework bietet einen Formalismus, um Planungsprobleme als Mengen von Zuständen, Aktionen und Übergängen zu definieren. Gemäß verschiedenen Ausführungsformen überbrückt das Verfahren von Figur 5 die Lücke zwischen diesem Formalismus und unstrukturierten Beschreibungen in natürlicher Sprache, indem es (z.B. dynamisch) modulare Komponenten eines Planungsproblemmodells (Domänenmodell, Anfangszustand, Zielzustand) generiert. Diese Modularität ermöglicht es dem symbolischen Planer, der das Planungsproblemmodell verarbeitet, in Offene-Welt-Umgebungen effektiv zu arbeiten, und ermöglicht die dynamische Anpassung von Plänen an neue Einschränkungen, Ziele oder Umgebungsveränderungen.

Gemäß verschiedenen Ausführungsformen können auch Trainingsdaten für Planungsalgorithmen erzeugt werden. Dies umfasst beispielsweise die Entwicklung synthetischer Szenarien zur gemeinsamen Schulung von LLMs und symbolischen Planern und/oder das Testen der Anpassungsfähigkeit und Robustheit von Planungssystemen unter verschiedenen und herausfordernden Bedingungen.

Die Herangehensweise von Figur 5. dient (letztendlich) zum Erzeugen eines Steuersignals für eine Robotervorrichtung, insbesondere in Umgebungen mit Menschen (oder Umgebungen, die für Menschen ausgelegt sind, oder "Menschzentriert" sind), und Robotervorrichtungen, die ein anpassungsfähiges Verhalten in sich verändernden Kontexten erfordern. Der Begriff "Robotervorrichtung" kann als sich auf irgendein technisches System (insbesondere mit einem mechanischen Teil, dessen Bewegung gesteuert wird) beziehend verstanden werden, wie z. B. eine computergesteuerte Maschine, ein Fahrzeug, ein automatisches Gerät, z.B. Haushaltsgerät, ein Elektrowerkzeug, eine Fertigungsmaschine, einen persönlichen Assistenten, ein oder ein Zugangssteuersystem.

## Patentansprüche

1. Verfahren zum Steuern eines technischen Systems (101, 311), aufweisend:
Empfangen (501) einer textuellen Domänenbeschreibung (304), die Aktionen beschreibt, die von dem technischen System (101, 311) ausgeführt werden können und Zustandseigenschaften des technischen Systems (101, 311) ändern;
Erzeugen (502) eines Domänenmodells gemäß der Domänenbeschreibung (304) mittels eines Domänenmodellgenerators (301);
Empfangen (503) einer textuellen Anfangszustandsbeschreibung (305), die einen Anfangszustand des technischen Systems (101, 311) beschreibt;
Erzeugen (504) eines Anfangszustandsmodells gemäß der Anfangszustandsbeschreibung (305) mittels eines Anfangszustandsmodellgenerators (302);
Empfangen (505) einer textuellen Zielzustandsbeschreibung (306), die einen Zielzustand des technischen Systems (101, 311) beschreibt;
Erzeugen (506) eines Zielzustandsmodells gemäß der Zielzustandsbeschreibung (306) mittels eines Zielzustandsmodellgenerators (303);
wobei der Domänenmodellgenerator (301), der Anfangszustandsmodellgenerator (302) und der Zielzustandsmodellgenerator (303) mittels mindestens eines generativen Sprachmodells implementiert sind, das die Domänenbeschreibung (304), die Anfangszustandsbeschreibung (305) bzw. die Zielzustandsbeschreibung (306) verarbeitet;
wobei der Domänenmodellgenerator (301), der Anfangszustandsmodellgenerator (302) und der Zielzustandsmodellgenerator (303) bei der Erzeugung des Domänenmodells, des Anfangszustandsmodells und/oder des Zielzustandsmodells Feedback zu dem Domänenmodell, dem Anfangszustandsmodell und/oder dem Zielzustandsmodell austauschen und das Domänenmodell, das Anfangszustandsmodell bzw. das Zielzustandsmodell anpassen, bis das Domänenmodell, das Anfangszustandsmodell und das Zielzustandsmodell konsistent und/oder vollständig sind;
Erstellen (507) eines Plans mittels eines symbolischen Planers (310) durch Zuführen des Domänenmodells, des Anfangszustandsmodells und des Zielzustandsmodells zu einem symbolischen Planer (310); und
Steuern (508) des technischen System (101, 311) gemäß dem erstellten Plan.

2. Verfahren nach Anspruch 1, wobei der Anfangszustandsmodellgenerator (302) prüft, ob Zustandseigenschaften, die die Anfangszustandsbeschreibung (305) spezifiziert, in dem Domänenmodell enthalten sind, und, in Reaktion darauf, dass er feststellt, dass eine oder mehrere Zustandseigenschaften, die die Anfangszustandsbeschreibung (305) spezifiziert, in dem Domänenmodell nicht enthalten sind, den Domänenmodellgenerator (301) auffordert, das Domänenmodell um die ein oder mehreren Zustandseigenschaften zu ergänzen.

3. Verfahren nach Anspruch 1 oder 2, wobei der Zielzustandsmodellgenerator (303) prüft, ob Zustandseigenschaften, die die Zielzustandsbeschreibung (306) spezifiziert, in dem Domänenmodell enthalten sind, und, in Reaktion darauf, dass er feststellt, dass eine oder mehrere Zustandseigenschaften, die die Zielzustandsbeschreibung (306) spezifiziert, in dem Domänenmodell nicht enthalten sind, den Domänenmodellgenerator (301) auffordert, das Domänenmodell um die ein oder mehreren Zustandseigenschaften zu ergänzen.

4. Verfahren nach einem der Ansprüche 1 bis 3, wobei der Zielzustandsmodellgenerator (303) prüft, ob Aktionen, die es ermöglichen, von dem Anfangszustand in den Zielzustand zu gelangen, in dem Domänenmodell enthalten sind, und, in Reaktion darauf, dass er feststellt, dass eine oder mehrere Aktionen, die es ermöglichen, von dem Anfangszustand in den Zielzustand zu gelangen, in dem Domänenmodell nicht enthalten sind, den Domänenmodellgenerator (301) auffordert, das Domänenmodell um die ein oder mehreren Aktionen zu ergänzen.

5. Verfahren nach einem der Ansprüche 1 bis 4, wobei der Zielzustandsmodellgenerator (303) prüft, ob Zustandseigenschaften, die die Zielzustandsbeschreibung (306) spezifiziert, in dem Anfangszustandsmodell enthalten sind, und, in Reaktion darauf, dass er feststellt, dass eine oder mehrere Zustandseigenschaften, die die Zielzustandsbeschreibung (306) spezifiziert, in dem Anfangszustandsmodell nicht enthalten sind, den Anfangszustandsmodellgenerator (302) auffordert, das Anfangszustandsmodell um die ein oder mehreren Zustandseigenschaften zu ergänzen.

6. Verfahren nach einem der Ansprüche 1 bis 5, wobei das Domänenmodell Variablen enthält und jede Variable mehrere Werte haben kann und eine Zustandseigenschaft des technischen Systems (101, 311) beschreibt.

7. Verfahren nach Anspruch 6, wobei der Anfangszustandsmodellgenerator (302) das Anfangszustandsmodell derart erzeugt, dass es die Werte zumindest eines Teils der Variablen gemäß der Anfangszustandsbeschreibung (305) festlegt.

8. Verfahren nach Anspruch 6 oder 7, wobei der Zielzustandsmodellgenerator (303) das Zielzustandsmodell derart erzeugt, dass es die Werte zumindest eines Teils der Variablen gemäß der Zielzustandsbeschreibung (306) festlegt.

9. Verfahren nach einem der Ansprüche 1 bis 8, wobei die Domänenbeschreibung (304), die Anfangszustandsbeschreibung (305) und die Zielzustandsbeschreibung (306) dem mindestens einen generativen Sprachmodell mit der Aufforderung zugeführt werden, ein Planungsproblemmodell bzw. Komponenten eines Planungsproblemmodells für den symbolischen Planer (310) zu erstellen.

10. Steuereinrichtung 106, eingerichtet zum Durchführen eines Verfahrens nach einem der Ansprüche 1 bis 9.

11. Computerprogramm mit Befehlen, die, wenn sie durch einen Prozessor ausgeführt werden, bewirken, dass der Prozessor ein Verfahren nach einem der Ansprüche 1 bis 9 durchführt.

12. Computerlesbares Medium, das Befehle speichert, die, wenn sie durch einen Prozessor ausgeführt werden, bewirken, dass der Prozessor ein Verfahren nach einem der Ansprüche 1 bis 9 durchführt.
